# EUROPÄISCHE PATENTANMELDUNG

(11) **EP 2 327 964 A2**
(43) Veröffentlichungstag der Anmeldung: **01.06.2011**
(21) Anmeldenummer: 10014532.5
(22) Anmeldetag: 12.11.2010
(51) Int. Cl.: G01D 13/26

(54) **Messanordnung**

(30) Priorität: 28.11.2009 DE 102009056259
(71) Anmelder: FESTO AG & Co, 73734 Esslingen (DE)
(72) Erfinder: Seitz, Armin, 76706 Dettenheim (DE); Franz, Jochen, 72762 Reutlingen (DE); Schneider, Heidemarie, 73230 Kirchheim (DE); Wagner, Dietmar, 71522 Backnang (DE)
(74) Vertreter: Kocher, Mark Werner

(57) **Zusammenfassung**

Die Erfindung betrifft eine Messanordnung mit einem Messgrößen-Bewegungswandler (2), der zur Bereitstellung einer Schwenkbewegung einer Zeigerwelle (3) um eine Schwenkachse (4) in Abhängigkeit von einem Betrag einer zu ermittelnden Messgröße ausgebildet ist und der in einem Grundgehäuse (5) angeordnet ist, mit einer an der Zeigerwelle (3) angebrachten Zeigereinrichtung (6) zur Anzeige der Schwenkbewegung der Zeigerwelle (4) sowie mit einer Abtasteinrichtung (7), die zur Bereitstellung eines die Messgröße abbildenden elektrischen Abtastsignals in Abhängigkeit von der Schwenkstellung der Zeigereinrichtung (6) ausgebildet ist und die an der Zeigerwelle (3) drehfest angebrachte Gebermittel (8) sowie eine dem Grundgehäuse (5) zugeordnete Sensoreinrichtung (9) zur Ermittlung der Schwenkstellung der Gebermittel (8) umfasst. Erfindungsgemäß ist vorgesehen, dass die Sensoreinrichtung (9) bezogen auf die Schwenkachse (4) in radialer Richtung beabstandet von den Gebermitteln (8) angeordnet ist.

## Beschreibung

Die Erfindung betrifft eine Messanordnung mit einem Messgrößen-Bewegungswandler, der zur Bereitstellung einer Schwenkbewegung einer Zeigerwelle um eine Schwenkachse in Abhängigkeit von einem Betrag einer zu ermittelnden Messgröße ausgebildet ist und der in einem Grundgehäuse angeordnet ist, mit einer an der Zeigerwelle angebrachten Zeigereinrichtung zur Anzeige der Schwenkbewegung der Zeigerwelle sowie mit einer Abtasteinrichtung, die zur Bereitstellung eines die Messgröße abbildenden elektrischen Abtastsignals in Abhängigkeit von der Schwenkstellung der Zeigereinrichtung ausgebildet ist und die an der Zeigerwelle drehfest angebrachte Gebermittel sowie eine dem Grundgehäuse zugeordnete Sensoreinrichtung zur Ermittlung der Schwenkstellung des Gebers umfasst.

Aus der EP 1 850 096 A1 geht ein Ferngeber für analoge Anzeigegeräte hervor. Dieser Ferngeber ist zur Nachrüstung von handelsüblichen, als feinmechanische Zeigerinstrumente ausgeführten Anzeigegeräten beispielsweise Manometern oder Thermometern zur Messung und Anzeige von Druck- oder Temperaturwerten, ausgebildet. Derartige Zeigerinstrumente umfassen einen Messgrößen-Bewegungswandler, der den Betrag der zu ermittelnden Messgröße in eine Rotation einer Zeigerwelle um eine längs der Zeigerwelle verlaufende Schwenkachse umsetzt. Bei dem bekannten Ferngeber wird ein auf der Zeigerwelle des Zeigerinstruments drehfest angebrachter Zeiger mit einem Permanentmagneten ausgestattet, dessen Winkelstellung von einem koaxial zur Mittelachse der Zeigerwelle angeordneten Hallsensor abgetastet und in einer entsprechenden Verarbeitungseinrichtung ausgewertet wird. Dabei sind der Hallsensor sowie die Ansteuer- und Auswerteschaltung für den Hallsensor in einer als Schutzglas ausgebildeten transparenten Abdeckung des Zeigerinstruments integriert. Dadurch kann eine Nachrüstung des konventionellen Zeigerinstruments durch Bestückung des Zeigers mit dem Permanentmagneten und Austausch des handelsüblichen Schutzglases durch das modifizierte Schutzglas mit der integrierten Ansteuerschaltung und dem Hallsensor verwirklicht werden.

Die DE 10337282 A1 offenbart eine Messgeräteeinheit mit einer Skala, einem Zeiger, der sich über der Skala dreht, einer Zeigersteuereinrichtung, einem Rotationsteil, welches durch die Zeigersteuereinrichtung gesteuert wird und zusammenhängend mit dem Zeiger ausgebildet ist und einem Zeigerpositionsdetektor, um zu detektieren, ob der Zeiger in einer vorbestimmten Position über der Skala positioniert ist, wobei der Zeigerpositionsdetektor magnetisches Material, welches in einem Teil des Rotationsteiles installiert ist, eine Ausgangswicklung zum Erzeugen eines magnetischen Flusses zu dem Rotationsteil hin sowie eine Detektionswicklung umfasst, um den Magnetfluss zu detektieren, um dadurch magnetisch festzustellen, dass der Zeiger an der vorbestimmten Position über der Skala positioniert ist.

Die EP2042842 offenbart ein Zeiger-Messinstrument, das für eine Nullstellungsanzeige ausgebildet ist. Das Zeiger-Messinstrument umfasst eine Zeiger-Referenzposition-Einstellung für die Bestimmung der Referenzposition des Zeigers sowie Steuermittel zur Rotation des Zeigers in Richtung zur Referenzposition, wenn eine Stromversorgung eines Schrittmotors aktiviert wird. Die Rotationsbewegung des Zeigers wird gestoppt, wenn dieser ein Referenzpositionssignal von der Zeiger-Referenzposition-Einstellung empfängt.

Die Aufgabe der Erfindung besteht darin, eine Messanordnung bereitzustellen, die in einfacher Weise durch Nachrüstung eines handelsüblichen Messgrößen-Bewegungswandlers gebildet werden kann und die eine Fernabtastung der Schwenkstellung der Zeigerwelle sowie ein ungestörtes Ablesen der Zeigereinrichtung ermöglicht.

Diese Aufgabe wird für eine Messanordnung der eingangs genannten Art mit den Merkmalen des Anspruchs 1 gelöst. Hierbei ist vorgesehen, dass die Sensoreinrichtung bezogen auf die Schwenkachse in radialer Richtung beabstandet von den Gebermitteln angeordnet ist.

Hierdurch ist es möglich, die Sensoreinrichtung benachbart zu den Gebermitteln anzuordnen, ohne dass hierdurch eine Beeinträchtigung der Ablesbarkeit der Messanordnung in Kauf genommen werden muss. Die Zeigereinrichtung ist vorzugsweise derart ausgebildet, dass sie sich im Wesentlichen orthogonal zur Schwenkachse, die vorzugsweise koaxial zu einer Mittellängsachse der Zeigerwelle ausgerichtet ist, erstreckt. Bei einer durch Veränderung des Betrags der Messgröße auftretenden Schwenkbewegung der Zeigerwelle überstreicht die Zeigereinrichtung eine kreisförmige Schwenkfläche, deren Flächennormale parallel zur Mittelachse der Zeigerwelle ausgerichtet ist. Ein Ablesen der Messanordnung durch einen Benutzer erfolgt in der Regel aus einer Blickrichtung, die im Wesentlichen orthogonal zur Schwenkfläche oder parallel zur Mittelachse der Zeigerwelle ausgerichtet ist. Aufgrund der erfindungsgemäßen Gestaltung muss die Sensoreinrichtung nicht zwischen der Zeigereinrichtung und dem Betrachter angeordnet werden, was zu einem teilweisen Verdecken der Schwenkfläche und zu einer eingeschränkten Sichtbarkeit der Zeigereinrichtung führen würde. Vielmehr kann die Sensoreinrichtung in radialer Anordnung, vorzugsweise zwischen Zeigeranordnung und Messgrößen-Bewegungswandler, angebracht werden, so dass die Schwenkfläche nicht von der Sensoreinrichtung verdeckt ist und eine vorteilhafte Ablesbarkeit der Zeigereinrichtung über deren gesamte Schwenkfläche sichergestellt ist.

Vorteilhafte Weiterbildungen der Erfindung sind Gegenstand von Unteransprüchen.

Zweckmäßig ist es, wenn die Sensoreinrichtung und die Gebermittel in einer gemeinsamen Sensorebene angeordnet sind, deren Flächennormale parallel zur Schwenkachse ausgerichtet ist. Dies ermöglicht eine besonders kompakte Anordnung der Sensoreinrichtung. Die Sensorebene wird von einer Hauptdetektionsebene der Sensoreinrichtung, also einer Ebene, in der eintreffende Felder oder Wellen von der Sensoreinrichtung mit hoher, vorzugsweise maximaler, Empfindlichkeit detektiert werden können, gebildet. Eine ungestörte Betrachtung der Zeigereinrichtung kann insbesondere dann gewährleistet werden, wenn die Sensorebene zwischen der Zeigereinrichtung und dem Messgrößen-Bewegungswandler angeordnet ist.. Vorzugsweise sind die Gebermittel derart ausgebildet, dass ihre Hauptwirkrichtung, beispielsweise eine Hauptrichtung von magnetischen Feldlinien, die von den Gebermitteln ausgehen, in der Sensorebene, liegt. Bei der Sensoreinrichtung kann es sich beispielsweise um einen Hall-Sensor handeln, der ein als Permanentmagnet ausgebildetes Gebermittel abtastet.

Bevorzugt umfassen die Gebermittel ein Ringelement, insbesondere einen Ringmagnet, dessen Ringachse parallel, insbesondere konzentrisch, zur Schwenkachse angeordnet ist. Das Ringelement kann an einer radial außenliegenden Oberfläche mit einer optisch, mechanisch und/oder magnetisch auswertbaren Strukturierung versehen sein, die von der Sensoreinrichtung zur Ermittlung der Schwenkstellung abgetastet wird. Bei einer vorteilhaften Ausführung des Ringelements als, vorzugsweise diametral magnetisierter, Ringmagnet lässt sich aufgrund des Verlaufs der magnetischen Feldlinien für jede Winkelposition der Zeigerwelle und der daran angebrachten Zeigereinrichtung ein eindeutiges Winkelsignal mit Hilfe der Sensoreinrichtung ermitteln. Dies ermöglicht die Auflösung einer vollständigen Umdrehung der Zeigerwelle, ohne dass uneindeutige Signale der Sensoreinrichtung auftreten. Das Ringelement kann als geschlossener Ring, als Ringsegment oder als Anordnung von Ringsegmenten ausgebildet sein.

In weiterer Ausgestaltung der Erfindung ist vorgesehen, dass der Abtasteinrichtung ein Eingabemittel zugeordnet ist, das zur Detektion von Benutzereingaben und zur Bereitstellung eines elektrischen Eingabesignals an die Abtasteinrichtung ausgebildet ist. Mit Hilfe des Eingabemittels können Einstellungen der Abtasteinrichtung durch einen Benutzer verändert werden. Bevorzugt dient das Eingabemittel zu einer Einstellung einer Schaltschwelle, bei deren Über- oder Unterschreiten durch den Betrag der Messgröße und die damit einhergehende Änderung der Schwenkposition der Zeigereinrichtung eine Schaltfunktion der Abtasteinrichtung ausgelöst wird. Beispielsweise kann eine Benutzereingabe mit Hilfe des Eingabemittels erfolgen, um einen Betrag der Messgröße festzulegen, ober- oder unterhalb dessen ein von der Messgröße mitbestimmter Vorgang oder Zustand in vorteilhafter oder unvorteilhafter Weise weiter verläuft.

Bevorzugt ist die Zeigereinrichtung linearbeweglich längs der Schwenkachse an der Zeigerwelle angeordnet und das Eingabemittel ist für eine Detektion der linearen Zeigerbewegung ausgebildet. Hierdurch kann eine besonders intuitive Bedienung der Messanordnung erreicht werden, da beispielsweise zur Einstellung eines Schwellwerts die drehfest auf der Zeigerwelle angebrachte Zeigereinrichtung von einem Benutzer durch Verschwenken der Zeigerwelle auf einen vom Benutzer gewünschten Schwellwert eingestellt wird. Durch anschließendes Drücken der Zeigereinrichtung, wodurch eine Linearbewegung längs der Zeigerwelle bewirkt werden kann, und eine dadurch hervorgerufene Ansteuerung des Eingabemittels wird die eingestellte Position der Zeigereinrichtung an die Abtasteinrichtung übertragen und kann dort als Schwellwerteinstellung oder Grenzwerteinstellung abgelegt werden. Beispielsweise handelt es sich bei dem Eingabemittel um einen Tastschalter, der benachbart zur Zeigerwelle zwischen der Zeigereinrichtung und dem Messgrößen-Bewegungswandler angeordnet ist. Dieser Tastschalter kann von einer dem Messgrößen-Bewegungswandler zugewandten Unterseite der Zeigereinrichtung betätigt werden, wenn ein Benutzer eine Bedienkraft auf die Zeigereinrichtung in Richtung des Messgrößen-Bewegungswandlers ausübt.

Zweckmäßig ist es, wenn die Abtasteinrichtung Auswertemittel zur Auswertung und Verarbeitung von elektrischen Abtastsignalen und Eingabesignalen umfasst. Die Auswertemittel ermöglichen eine lokale Auswertung und Verarbeitung der von der Sensoreinrichtung bereitgestellten elektrischen Abtastsignale und von Eingabesignalen, die von den Eingabemitteln zur Verfügung gestellt werden. Vorzugsweise sind die Auswertemittel für eine Kommunikation mit einer zentralen Steuereinheit ausgebildet, um erfolgte Benutzereingaben und/oder ermittelte Beträge der Messgröße und/oder Schwellwertüberschreitungen oder Schwellwertunterschreitungen an die Steuereinheit zu übertragen. Bei der zentralen Steuereinheit kann es sich beispielsweise um eine Maschinensteuerung für eine Vorrichtung handeln, an der die Messanordnung zur Ermittlung eines Betrags einer Messgröße angebracht ist.

Bevorzugt sind die Auswertemittel für eine Verarbeitung und Speicherung wenigstens eines benutzerdefinierten Messgrößen-Schwellwerts, insbesondere wenigstens zweier unterschiedlicher benutzerdefinierter Messgrößen-Schwellwerte, ausgebildet. Der benutzerdefinierte Messgrößen-Schwellwert kann beispielsweise von einer Steuereinrichtung über eine elektrische Verbindungsleitung an die Auswertemittel übertragen werden. Vorzugsweise wird der Schwellwert durch unmittelbare Eingabe eines Benutzers mit Hilfe der Eingabemittel an die Auswertemittel bereitgestellt. Besonders bevorzugt sind die Auswertemittel dazu eingerichtet, den benutzerdefinierten Messgrößen-Schwellwert mit dem elektrischen Abtastsignal der Sensoreinrichtung zu vergleichen. Bei einem Über- bzw. Unterschreiten des benutzerdefinierten Messgrößen-Schwellwerts durch den tatsächlich gemessenen Betrag der Messgröße kann die Auswerteeinrichtung eine vorgebbare Funktion, insbesondere eine Schaltfunktion oder eine Signalausgabe zu bewirken. Insbesondere sind die Auswertemittel für die Verarbeitung und Speicherung wenigstens zweier unterschiedlicher benutzerdefinierter Messgrößen-Schwellwerte ausgebildet, so dass beispielsweise ein Bereich für die zu ermittelnde Messgröße festgelegt werden kann. Für Beträge der Messgröße innerhalb und außerhalb des Bereichs sind die Auswertmittel derart programmiert oder programmierbar, dass eine Über- oder Unterschreitung der Messgrößen-Schwellwerte unterschiedliche Funktionsweisen der Auswertemittel hervorruft.

Zweckmäßig ist es, wenn die Abtasteinrichtung Anschlussmittel, insbesondere einen Steckverbinder, zur Ankopplung einer elektrischen Steckverbindung aufweist. Hiermit kann in einfacher Weise eine lösbare elektrische Verbindung, beispielsweise zu einer Steuereinrichtung, hergestellt werden. Dies ermöglicht die einfache Integration der Messanordnung beispielsweise in eine Maschinensteuerung.

Bevorzugt umfasst die Abtasteinrichtung Leuchtmittel, die zur Beleuchtung einer benachbart zur Zeigereinrichtung angeordneten, insbesondere normal zur Schwenkachse ausgerichteten, Skale ausgebildet sind. Bei den Leuchtmitteln kann es sich beispielsweise um elektrische Glühbirnen oder Leuchtdioden handeln. Die Leuchtmittel werden vorzugsweise von einer Ansteuerschaltung angesteuert, die ihrerseits mit der Abtasteinrichtung und/oder den Auswertemitteln gekoppelt ist. Beispielsweise kann vorgesehen sein, die Leuchtmittel in vorgebbarer Weise zu aktivieren, wenn die von der Messanordnung ermittelte Messgröße einen Betrag aufweist, der ober- bzw. unterhalb eines benutzerdefinierten Messgrößen-Schwellwerts oder außerhalb bzw. innerhalb eines durch zwei unterschiedliche, benutzerdefinierte Messgrößen-Schwellwerte bestimmen Messbereichs liegt. Bei der Skale kann es sich um ein Bauteil handeln, das vollständig, teilweise oder nicht für Lichtwellenlängen durchlässig ist. Vorzugsweise weist die Skale wenigstens eine mit einer an die Zeigereinrichtung angepassten Beschriftung versehe Oberfläche auf. Durch Vergleich der Schwenkwinkelstellung der Zeigereinrichtung mit der Beschriftung auf der Skale wird eine unmittelbare Ablesbarkeit des Betrags der gemessenen Messgröße ermöglicht.

Bei einer Weiterbildung der Erfindung ist vorgesehen, dass die Leuchtmittel für eine wahlweise Beleuchtung der Skale mit wenigstens zwei, von einem Benutzer voneinander unterscheidbaren Lichtwellenlängen, ausgebildet sind. Mit Hilfe der wahlweisen Beleuchtung der Skale mit unterschiedlichen Lichtwellenlängen kann eine von einem Benutzer schnell erfassbare Information bereitgestellt werden, beispielsweise ob ein von der Messanordnung ermittelter Betrag einer Messgröße innerhalb eines vorgegebenen Bereichs oder unter bzw. oberhalb einer vorgegebenen Schaltschwelle liegt. Hierzu können beispielsweise die typischen Signalfarben Rot und Grün von den Leuchtmitteln bereitgestellt werden. Vorzugsweise wird mit der Farbe Grün eine Einhaltung eines vorgegebenen Grenzwerts oder eines vorgegebenen Wertebereichs signalisiert. Mit der Farbe Rot wird hingegen exemplarisch eine Über- bzw. Unterschreitung des Grenzwerts oder ein Verlassen des vorgegebenen Wertebereichs signalisiert.

Bevorzugt ist benachbart zum Leuchtmittel ein Lichtleitmittel angeordnet, das für eine Einkopplung der vom Leuchtmittel bereitgestellten Lichtwellen und für eine gleichmäßige Verteilung der Lichtwellen über einen vorgebbaren Bereich der Skale ausgebildet ist. Mit Hilfe des Lichtleitmittels wird eine, vorzugsweise diffuse, Verteilung der vom Leuchtmittel bereitgestellten Lichtwellen bezweckt. Vorzugsweise wird mit einer geringen Anzahl von Leuchtmitteln eine homogene Ausleuchtung der Skale erzielt.

Zweckmäßig ist es, wenn das Lichtleitmittel ringförmig oder ringsegmentförmig ausgebildet ist, wobei eine Ringachse parallel, insbesondere konzentrisch, zur Schwenkachse ausgerichtet ist. Hierdurch lässt sich eine kompakte Anordnung des Lichtleitmittels, insbesondere zwischen dem Messgrößen-Bewegungswandler und der Zeigereinrichtung, um die Zeigerwelle herum erzielen. Vorzugsweise ist das Lichtleitmittel als Ringsegment aus einem optisch transparenten Kunststoff, beispielsweise Polymethylmethacrylat (PMMA), insbesondere als Kunststoffspritzgussteil, hergestellt. Eine zumindest im Wesentlichen radial ausgerichtete Stirnfläche des Ringsegments bildet vorzugsweise die zur Einkopplung der Lichtwellen vorgesehene Einkoppelfläche.

Bei einer weiteren Ausgestaltung der Erfindung ist vorgesehen, dass dem Leuchtmittel Reflektormittel zugeordnet sind, die für eine Ausrichtung der vom Leuchtmittel abgegebenen Lichtwellen in Richtung der Skale ausgebildet sind. Die Reflektormittel ermöglichen eine Ausrichtung der Lichtwellen, vorzugsweise in eine einheitliche Richtung, mit einem hohen Wirkungsgrad, so dass hiermit eine besonders effiziente Beleuchtung der Skale erzielt werden kann.

Vorzugsweise ist wenigstens ein Leuchtmittel als Leuchtdiode, insbesondere als organische Leuchtdiode, mit einer im Wesentlichen der Skale entsprechenden Ausdehnung ausgebildet. Hierdurch kann auf zusätzliche Einrichtungen zur Bündelung oder Verteilung der vom Leuchtmittel abgegebenen Lichtwellen verzichtet werden. Vielmehr ist eine homogene Ausleuchtung der Skale bereits durch den Aufbau des Leuchtmittels gewährleistet.

Zweckmäßig ist es, wenn die Skale aus einem für Lichtwellen zumindest im Wesentlichen durchlässigen Material hergestellt ist. Dies ermöglicht eine Hinterleuchtung der Skale, bei der die Leuchtmittel vorzugsweise zwischen Skale und Messgrößen-Bewegungswandler angeordnet sind. Hierdurch wird eine besonders vorteilhafte Ablesbarkeit der Skale und der darauf aufgebrachten Skalierung, d.h. Beschriftung gewährleistet. Vorzugsweise dient die Skale selbst als diffuses Medium zur teilweisen Streuung von Lichtwellen und verbessert somit die homogenere Ausleuchtung der Skale.

Bevorzugt ist der Messgrößen-Bewegungswandler als Fluiddruck-Bewegungswandler, bevorzugt als Manometer, insbesondere als Rohrfeder-Manometer, ausgebildet. Dies ermöglicht eine universelle Anwendbarkeit der Messanordnung im Bereich der fluidbetätigten Automatisierungstechnik, insbesondere im Bereich der pneumatischen Steuerungseinrichtungen und Aktoren.

Mi der erfindungsgemäßen Messanordnung ist es möglich, bestehende Maschinen oder Anlagen, in denen bislang konventionelle, sensorfreie Messgrößen-Bewegungswandler eingesetzt wurden, durch Nachrüstung dieser Messgrößen-Bewegungswandler mit entsprechenden Abtasteinrichtungen und Auswertemitteln beispielsweise Prozessabläufe elektronisch zu überwachen , Schwellwerte vom Benutzer direkt an der Messanordnung oder über eine Steuereinrichtung einstellbar zu machen und die Einhaltung oder Abweichung von eingestellten Schwellwerten optisch auffällig darzustellen und/oder an eine zentrale Steuereinrichtung zu kommunizieren.

Vorteilhafte Ausführungsformen der Erfindung sind in der Zeichnung dargestellt. Dabei zeigt:
- Fig. 1: eine perspektivische Darstellung einer ersten Ausführungsform einer Messanordnung,
- Fig. 2: eine Seitenansicht der Messanordnung gemäß Fig. 1,
- Fig. 3: eine Schnittdarstellung der Messanordnung gemäß den Fig. 1 und 2
- Fig. 4: eine perspektivische Detaildarstellung zentraler Komponenten der Messanordnung gemäß den Figuren 1 bis 3 und
- Fig. 5: eine Schnittdarstellung einer zweiten Ausführungsform der Messanordnung.

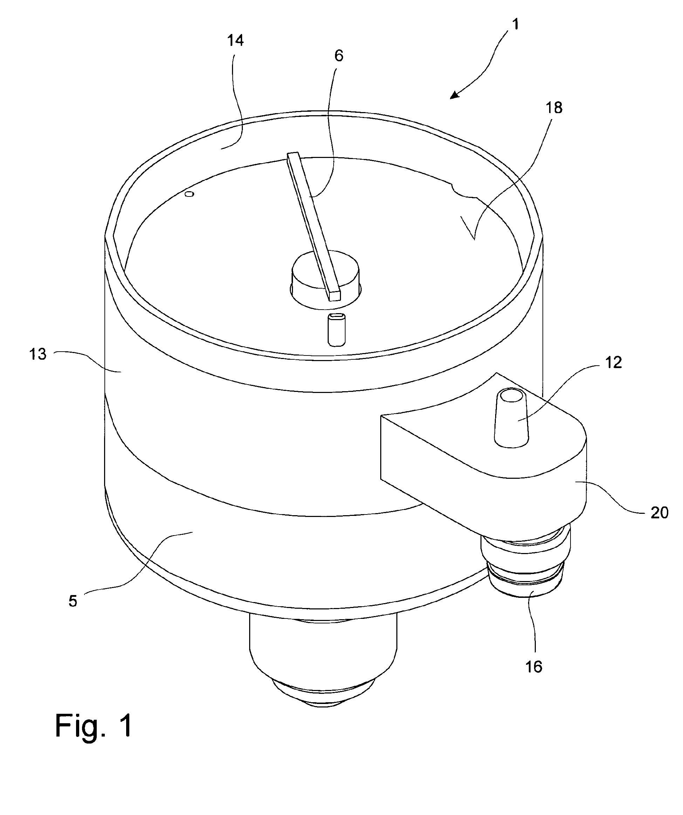

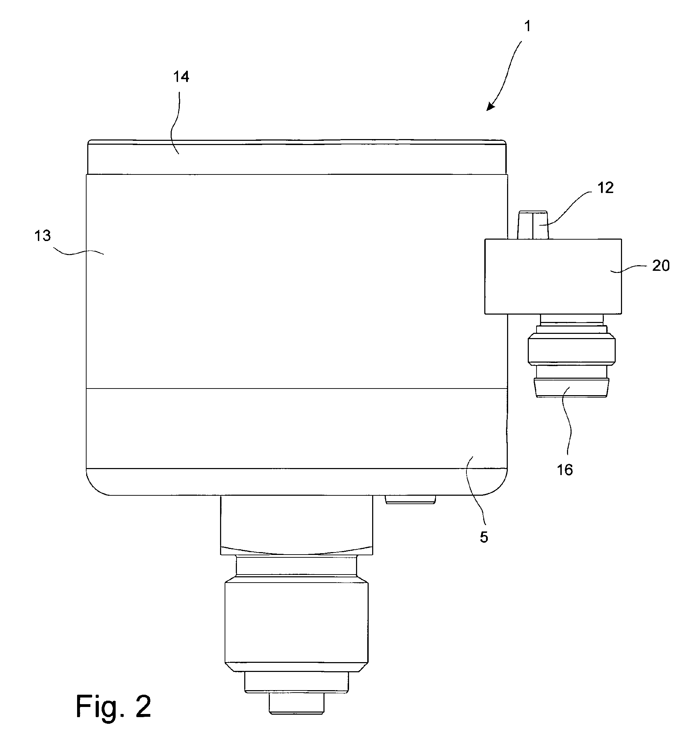

Eine in den Fig. 1 bis 4 dargestellte erste exemplarische Ausführungsform einer Messanordnung 1 umfasst ein handelsübliches, feinmechanisches Anzeigegerät, beispielsweise ein Manometer oder Thermometer, das zur Anzeige eines Betrags einer Messgröße, beispielsweise eines Drucks oder einer Temperatur, ausgebildet ist. Bei der dargestellten Ausführungsform einer Messanordnung 1 handelt es sich bei dem Anzeigegerät exemplarisch um ein Manometer zur Anzeige eines Fluiddrucks. Das Anzeigegerät umfasst ein Grundgehäuse 5, das beispielsweise zylindrisch ausgebildet ist. Das Grundgehäuse 5 ist an einer, vorliegend kreisförmigen, Stirnfläche mit einem nicht näher bezeichneten Anschlussstutzen zur Ankopplung an eine Fluidleitung versehen, in der ein druckbeaufschlagtes Fluid vorliegen kann. In dem Grundgehäuse 5 sind die nachstehend näher beschriebenen Bestandteile eines typischen feinmechanischen Anzeigegeräts aufgenommen. Auf das Grundgehäuse 5 ist ein Zusatzgehäuse 13 aufgesetzt, in dem nachstehend näher beschriebene elektrische und elektronische Komponenten der Messanordnung 1 untergebracht sind, die unter anderem für eine Ermittlung eines Messsignals in Abhängigkeit von dem Betrag der Messgröße ausgebildet sind.

Das Zusatzgehäuse 13 ist an einer dem Grundgehäuse 5 abgewandten Seite von einem transparenten, im Wesentlichen rotationssymmetrisch ausgebildeten Schauglas 14 abgedeckt, das eine Betrachtung einer Zeigereinrichtung 6 und einer darunter angeordneten Skale 18 durch einen Benutzer ermöglicht. An dem Zusatzgehäuse 13 ist ein Vorsprung 20 ausgebildet, an dessen Oberseite ein exemplarisch als Tastschalter ausgebildetes Eingabemittel 12 angeordnet ist, das Benutzereingaben ermöglicht. An der Unterseite des Vorsprungs 20 sind exemplarisch als Steckverbindung ausgebildete Anschlussmittel 16 angeordnet, die eine Ankopplung von elektrischen Verbindungen ermöglichen. Über die Anschlussmittel 16 können Versorgungsspannungen bereitgestellt und Messsignale mit anderen Komponenten ausgetauscht werden.

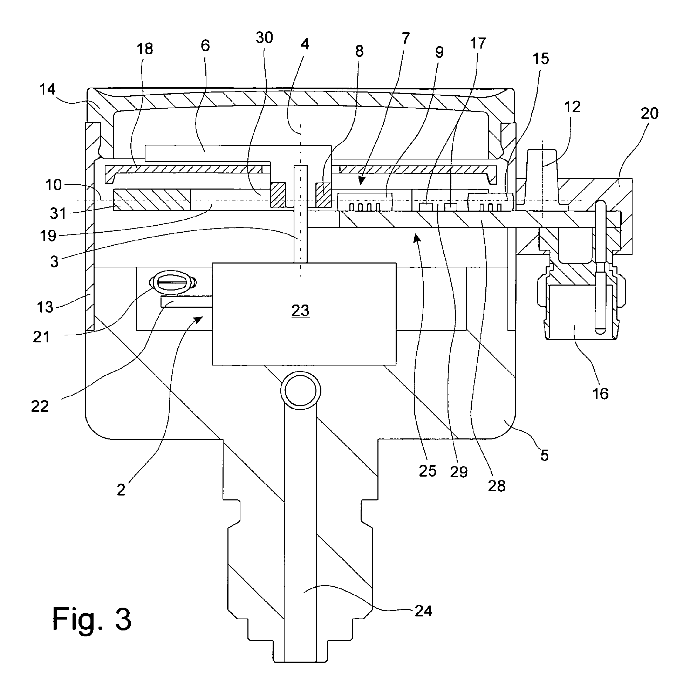

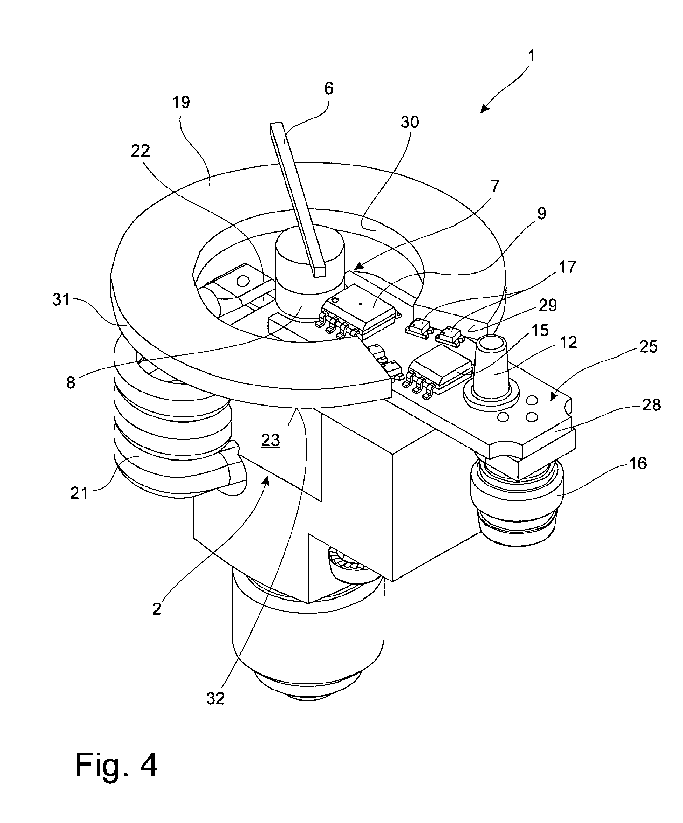

In dem Grundgehäuse 5 des handelsüblichen Anzeigegeräts ist ein in den Figuren 3 und 4 näher dargestellter Messgrößen-Bewegungswandler 2 angeordnet. Der Messgrößen-Bewegungswandler 2 ist exemplarisch als Kombination einer bereichsweise wendelförmig ausgebildeten, vorzugsweise aus Metall hergestellten, Rohrfeder 21 und einer mit der Rohrfeder 21 über ein Koppelglied 22 bewegungsgekoppelten Getriebeeinrichtung 23 ausgebildet. Die Rohrfeder 21 steht an einem ersten Endbereich in kommunizierender fluidischer Verbindung mit einer im Anschlussstutzen des Grundgehäuses 5 ausgebildeten Anschlussbohrung 24 und ist an einem zweiten Endbereich endseitig verschlossen.

Bei einer Druckbeaufschlagung der Rohrfeder 21 durch Zufuhr von druckbeaufschlagtem Fluid über die Anschlussbohrung 24 weitet sich der Durchmesser des wendelförmigen Abschnitts der Rohrfeder 21 auf, wodurch eine Schwenkbewegung des zweiten Endabschnitts im Wesentlichen um eine Wendelachse des wendelförmigen Rohrabschnitts erfolgt. Diese Schwenkbewegung wird über das Koppelglied 22 als im Wesentlichen lineare Bewegung in die Getriebeeinrichtung 23 eingeleitet. In der Getriebeeinrichtung 23 erfolgt eine Übersetzung der eingeleiteten Linearbewegung in eine Rotationsbewegung einer Zeigerwelle 3, die an einer Oberseite der Getriebeeinrichtung 23 abragt. Die Zeigerwelle 3 kann um eine Schwenkachse 4 rotieren und ist mit einer im Wesentlichen orthogonal zur Schwenkachse 4 erstreckten Zeigereinrichtung 6 ausgestattet.

Bei einer Rotation der Zeigerwelle 3 vollzieht die Zeigereinrichtung 6 eine Schwenkbewegung um die Schwenkachse 4. Diese Schwenkbewegung steht in einer vorgebbaren Beziehung zum dem Betrag der zu ermittelnden Messgröße und ermöglicht es einem Benutzer, anhand der Schwenkstellung der Zeigereinrichtung 6 den ermittelten Betrag der Messgröße abzulesen. Hierzu ist auf der Skale 18 eine nicht näher dargestellte Skalierung angebracht, anhand derer der Betrachter die Schwenkstellung der Zeigereinrichtung 6 in einfacher Weise in den ermittelten Betrag der Messgröße umsetzen kann.

Das handelsübliche, feinmechanische Anzeigegerät ist lediglich für eine Ablesung durch einen Benutzer ausgebildet. Für eine automatische Abtastung der Schwenkstellung der Zeigereinrichtung 6, beispielsweise um eine Integration des handelsüblichen, sensorfreien Anzeigegeräts in eine Steuereinrichtung zu ermöglichen, ist das Zusatzgehäuse 13 mit den darin aufgenommenen elektronischen Komponenten vorgesehen. Das Zusatzgehäuse 13 ist dazu ausgebildet, anstelle einer nicht dargestellten Abdeckung für das Anzeigegerät auf das Grundgehäuse 5 aufgesetzt zu werden. In dem Zusatzgehäuse 13 ist eine elektronische Schaltung 25 angeordnet, die exemplarisch mit diskreten elektrischen und elektronischen Bauelementen auf einer beispielsweise als gedruckte Schaltung ausgebildeten Leiterplatte 28 verwirklicht ist.

Auf der Leiterplatte 28 sind eine exemplarisch als Magnetfeldsensor, insbesondere Hallsensor, ausgebildete Sensoreinrichtung 9, die beispielsweise als Tastschalter ausgebildeten Eingabemittel 12 und exemplarisch als Mikrocontroller ausgebildete Auswertemittel 15 angeordnet. Diese elektronischen Komponenten sind miteinander durch nicht näher dargestellte, in die Leiterplatte 28 integrierte elektrische Leiterbahnen elektrisch miteinander verknüpft.

Desweiteren sind auf einer Oberseite der Leiterplatte 28 mehrere, vorzugsweise als Leuchtdioden ausgebildete, Leuchtmittel 17 angeordnet. Zudem sind exemplarisch als Steckverbindung ausgebildete Anschlussmittel 16 vorgesehen, die wie die Leuchtmittel 17 durch entsprechende Leiterbahnen mit den übrigen Komponenten auf der Leiterplatte 28 verknüpft sind.

Die Sensoreinrichtung 9 ist in radialer Richtung beabstandet von der Zeigerwelle 3 auf der Leiterplatte 28 angeordnet und ist zur Abtastung eines exemplarisch als Ringmagnet ausgebildeten, an der Zeigereinrichtung 6 drehfest angebrachten Gebermittels 8 vorgesehen. Die Sensoreinrichtung 9 ermöglicht zusammen mit den Gebermitteln 8 die Ermittlung der Schwenkstellung der Zeigereinrichtung 6 und die Bereitstellung eines der Schwenkstellung der Zeigereinrichtung 6 entsprechenden Abtastsignals.

Die Sensoreinrichtung 9 ist derart gegenüber den Gebermitteln 8 angeordnet, dass eine Abtastung der Gebermittel 8 durch die Sensoreinrichtung 9 mit einer hohen, vorzugsweise maximalen, Empfindlichkeit vorgenommen werden kann. Eine von der Sensoreinrichtung 9 bestimmte Ebene, in der die Sensoreinrichtung 9 eine maximale Empfindlichkeit für eintreffende magnetische Felder und/oder elektromagnetische Wellen aufweist, wird als Sensorebene 10 bezeichnet. Exemplarisch ist das als Ringmagnet ausgebildete Gebermittel 8 für eine Bereitstellung von magnetischen Feldern ausgebildet, die sich entlang von Feldlinien im Wesentlichen in der Sensorebene 10 ausbreiten, die ihrerseits orthogonal zur Schwenkachse 4 ausgerichtet ist.

Die vorzugsweise als Leuchtdioden ausgebildeten Leuchtmittel 17 sind für eine Bereitstellung von Lichtwellen an einer orthogonal zur Oberfläche der Leiterplatte 28 ausgerichteten, nicht näher bezeichneten Leuchtfläche vorgesehen. Diese Leuchtfläche ist gegenüberliegend zu einer rechteckigen Stirnfläche 29 des ringabschnittsförmig ausgebildeten Lichtleitmittels 19 angeordnet. Hierdurch wird eine Einkopplung der von den Leuchtmitteln 17 abgegebenen Lichtwellen in die Lichtleitmittel 19 mit einem hohen Wirkungsgrad ermöglicht.

Die Lichtleitmittel 19 sind exemplarisch aus einem transparenten Kunststoff hergestellt. Vorzugsweise sind die Lichtleitmittel 19 an innen- bzw. außenliegenden Umfangsflächen 30, 31 und an einer der Zeigereinrichtung 6 abgewandten Ringfläche 32 verspiegelt ausgebildet, um eine homogene Verteilung der von den Leuchtmitteln 17 abgegebenen Lichtwellen über das gesamte Lichtleitmittel 19 in Richtung der Skale 18 und der Zeigereinrichtung 6 zu gewährleisten.

Vorliegend ist die scheibenartig ausgebildete, vorzugsweise aus einem transparenten Kunststoff hergestellte, Skale 18 zwischen der Zeigereinrichtung 6 und den Lichtleitmitteln 19 angeordnet. Somit dringen die ausgehend von den Lichtleitmitteln 19 in Richtung der Zeigereinrichtung 6 abgestrahlten Lichtwellen durch die Skale 18 und hinterleuchten die auf der Skale 18 aufgebrachte, nicht dargestellte, beispielsweise aufgedruckte, Skalierung. Dies führt zu einer guten Ablesbarkeit der Skale auch bei Dunkelheit oder ungünstigen Lichtbedingungen.

Das Zusatzgehäuse 13 ist mit dem aufgeschnappten Schauglas 14 verschlossen, wodurch die bewegten bzw. elektronischen Komponenten der Messanordnung 1 staub- und gegebenenfalls feuchtigkeitsgeschützt angeordnet sind. Vorzugsweise ist die Schnappverbindung zwischen dem Schauglas 14 und dem Zusatzgehäuse 13 derart ausgebildet, dass das Schauglas 14 von einem Benutzer abgenommen werden kann, um Zugriff auf die Zeigereinrichtung 6 zu erhalten.

Beispielsweise kann vorgesehen sein, eine Programmierung eines Schwellwerts oder eines Vorzugsbereichs für den Betrag der zu ermittelnden Messgröße mit Hilfe der Zeigereinrichtung 6 und der Eingabemittel 12 durchzuführen. Eine derartige Programmierung kann insbesondere so vorgenommen werden, dass ein Benutzer nach Abnahme des Schauglases 14 die Zeigereinrichtung 6 manuell in eine Schwenkwinkelstellung bringt, die einen gewünschten Schwellwert oder einer gewünschten ersten Bereichsgrenze entspricht. Zu diesem Zeitpunkt betätigt der Benutzer das Eingabemittel 12, so dass die zu diesem Zeitpunkt eingenommene Schwenkstellung der Zeigereinrichtung 6 durch die Sensoreinrichtung 9 ermittelt werden kann. Die ermittelte Schwenkstellung wird in den Auswertemitteln 15 gespeichert und nachfolgend wiederkehrend von den Auswertemitteln 15 mit der tatsächlichen Schwenkposition der Zeigerwelle 3 und der daran angebrachten Zeigereinrichtung 6 verglichen. Gegebenenfalls kann in gleicher Weise die Programmierung einer zweiten Bereichsgrenze vorgenommen werden.

Im Betrieb der Messanordnung 1 wird die Schwenkstellung der Zeigereinrichtung 6 wiederkehrend abgetastet und bei einem Unter- oder Überschreiten der vorgegebenen Schwenkstellung kann ein Schaltsignal ausgelöst werden. Mit dem Schaltsignal, dass von den Auswertemitteln 15 bereitgestellt werden kann, kann beispielsweise eine Ansteuerung der Leuchtmittel 17 vorgenommen werden. Beispielsweise können die Leuchtmittel 17 für den Fall, dass der Betrag der Messgröße einen vorgegebenen Schwellwert über- oder unterschreitet, aktiviert werden, um einem Benutzer optisch zu verdeutlichen, dass eine Schwellwertüberschreitung stattgefunden hat.

Bevorzugt sind die Leuchtmittel 17 derart ausgebildet, dass sie wahlweise zwei unterschiedliche, vom Benutzer unterscheidbare Lichtwellenlängen abgeben. Somit kann beispielsweise bei Unterschreiten eines vorgegebenen Schwellwerts, beispielsweise eines Mindestdruckwerts, eine Beleuchtung der Skale 18 mit rotem Licht erfolgen, um eine Gefahrensituation anzuzeigen. Bei Überschreiten des eingegebenen Schwellwerts erfolgt eine Hinterleuchtung der Skale 18 mit grünem Licht, um einem Benutzer anzuzeigen, dass der vorgegebene Schwellwert eingehalten wird.

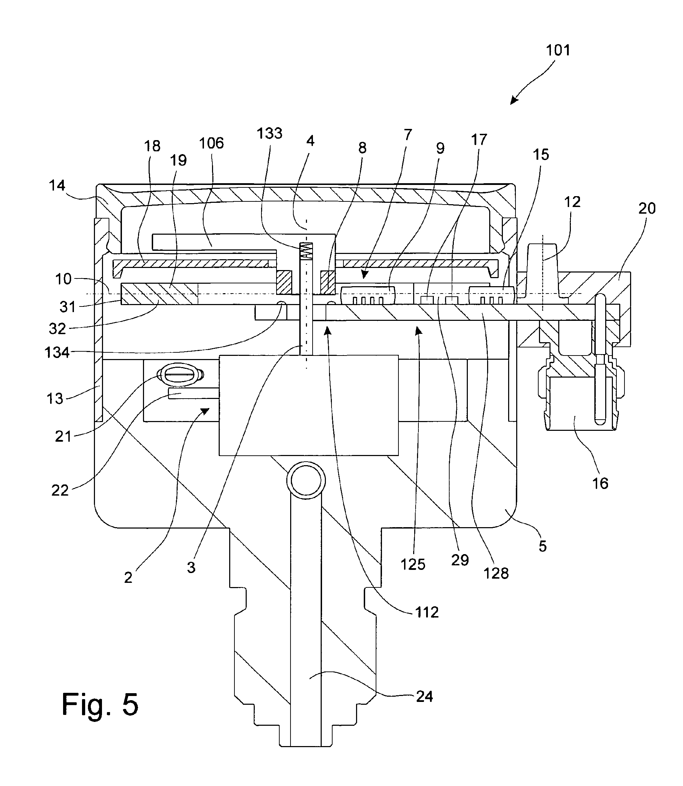

Eine zweite Ausführungsform einer Messanordnung 101 ist in der Fig. 5 dargestellt. Die Messanordnung 101 weist im Wesentlichen den gleichen Aufbau wie die in den Fig. 1 bis 4 dargestellte Ausführungsform auf, so dass für funktionsgleiche Komponenten die gleichen Bezugszeichen wie in den Fig. 1 bis 4 verwendet werden. Bei der Messanordnung 101 erstreckt sich die Leiterplatte 128 um die Zeigerwelle 3 herum und weist eine von der Zeigerwelle 3 durchsetzte Ausnehmung auf. Auf dem exemplarisch ringförmig ausgebildeten, mit der Ausnehmung versehenen Abschnitt der Leiterplatte 128 sind Eingabemittel 112 angeordnet, die von der parallel zu Schwenkachse 4 bewegbaren Zeigereinrichtung 106 ansteuerbar sind. Exemplarisch sind als Eingabemitteln 112 zwei gewölbte, elastische Federkontakte 134 auf der Leiterplatte 128 unterhalb des als Ringmagnet ausgeführten Gebermittels 108 angeordnet.

Wenn die Zeigereinrichtung 106 durch Ausüben einer axialen Betätigungskraft durch einen Benutzer in Richtung des Messgrößen-Bewegungswandlers 2 mit dem elektrisch leitenden Gebermittel 8 in Berührkontakt mit den beiden Federkontakten 134 kommt, wird dadurch ein Stromkreis geschlossen und somit eine Benutzereingabe von der elektronischen Schaltung 25 detektiert.

Um eine Rückstellung der Zeigereinrichtung 106 nach Betätigung durch einen Benutzer aus der nicht dargestellten Schaltstellung in die dargestellte Neutralstellung zu bewirken, ist vorzugsweise eine Federeinrichtung 133 vorgesehen, die dafür sorgt, dass in der Neutralstellung kein Schaltsignal von den Eingabemitteln 112 erzeugt wird.

Bei der Ausführungsform gemäß der Figur 5 kann gegebenenfalls auf die Eingabemittel 12 verzichtet werden und eine Programmierung der Messanordnung 101 kann in besonders intuitiver Weise dadurch vorgenommen werden, dass die Zeigereinrichtung 106 in die gewünschte Stellung gebracht wird und dieser Stellung durch Niederdrücken in linearer Richtung der gewünschte Schwellwert einprogrammiert wird.

## Patentansprüche

1. Messanordnung mit einem Messgrößen-Bewegungswandler (2), der zur Bereitstellung einer Schwenkbewegung einer Zeigerwelle (3) um eine Schwenkachse (4) in Abhängigkeit von einem Betrag einer zu ermittelnden Messgröße ausgebildet ist und der in einem Grundgehäuse (5) angeordnet ist, mit einer an der Zeigerwelle (3) angebrachten Zeigereinrichtung (6) zur Anzeige der Schwenkbewegung der Zeigerwelle (4) sowie mit einer Abtasteinrichtung (7), die zur Bereitstellung eines die Messgröße abbildenden elektrischen Abtastsignals in Abhängigkeit von der Schwenkstellung der Zeigereinrichtung (6) ausgebildet ist und die an der Zeigerwelle (3) drehfest angebrachte Gebermittel (8) sowie eine dem Grundgehäuse (5) zugeordnete Sensoreinrichtung (9) zur Ermittlung der Schwenkstellung der Gebermittel (8) umfasst, **dadurch gekennzeichnet, dass** die Sensoreinrichtung (9) bezogen auf die Schwenkachse (4) in radialer Richtung beabstandet von den Gebermitteln (8) angeordnet ist.

2. Messanordnung nach Anspruch 1, **dadurch gekennzeichnet, dass** die Sensoreinrichtung (9) und die Gebermittel (8) in einer gemeinsamen Sensorebene (10) angeordnet sind, deren Flächennormale parallel zur Schwenkachse (4) ausgerichtet ist.

3. Messanordnung nach Anspruch 1 oder 2, **dadurch gekennzeichnet, dass** die Gebermittel (8) als Ringelement, insbesondere als Ringmagnet, ausgebildet sind, dessen Ringachse parallel, insbesondere konzentrisch, zur Schwenkachse (4) angeordnet ist.

4. Messanordnung nach einem der vorhergehenden Ansprüche, **dadurch gekennzeichnet, dass** der Abtasteinrichtung (7) ein Eingabemittel (12; 112) zugeordnet ist, das zu Detektion von Benutzereingaben und zur Bereitstellung eines elektrischen Eingabesignals an die Abtasteinrichtung (9) ausgebildet ist.

5. Messanordnung nach einem der vorhergehenden Ansprüche, **dadurch gekennzeichnet, dass** die Zeigereinrichtung (106) linearbeweglich längs der Schwenkachse (4) an der Zeigerwelle (3) angeordnet ist und dass das Eingabemittel (112) für eine Detektion der linearen Zeigerbewegung ausgebildet ist.

6. Messanordnung nach einem der vorhergehenden Ansprüche, **dadurch gekennzeichnet, dass** die Abtasteinrichtung (7) Auswertemittel (15) zur Auswertung und Verarbeitung von elektrischen Abtastsignalen und Eingabesignalen umfasst.

7. Messanordnung nach Anspruch 6, **dadurch gekennzeichnet, dass** die Auswertemittel (15) für eine Verarbeitung und Speicherung wenigstens eines benutzerdefinierten Messgrößen-Schwellwerts, insbesondere wenigstens zweiter unterschiedlicher benutzerdefinierter Messgrößen-Schwellwerte, ausgebildet sind.

8. Messanordnung nach einem der vorhergehenden Ansprüche, **dadurch gekennzeichnet, dass** die Abtasteinrichtung (9) Anschlussmittel (16), insbesondere einen Steckverbinder, zur Übertragung elektrischer Signale und Spannungen aufweist.

9. Messanordnung nach einem der vorhergehenden Ansprüche, **dadurch gekennzeichnet, dass** die Abtasteinrichtung (7) Leuchtmittel (17) umfasst, die zur Beleuchtung einer benachbart zur Zeigereinrichtung (6) angeordneten, insbesondere normal zur Schwenkachse ausgerichteten, Skale (18) ausgebildet sind und/oder die für eine wahlweise Beleuchtung der Skale (18) mit wenigstens zwei, von einem Benutzer voneinander unterscheidbaren Lichtwellenlängen ausgebildet sind.

10. Messanordnung nach Anspruch 8 oder 9, **dadurch gekennzeichnet, dass** benachbart zum Leuchtmittel (17) ein Lichtleitmittel (19) angeordnet ist, dass für eine Einkopplung der vom Leuchtmittel (17) bereitgestellten Lichtwellen und für eine gleichmäßige Verteilung der Lichtwellen über einen vorgebbaren Bereich des Skale (18) ausgebildet ist.

11. Messanordnung nach Anspruch 11, **dadurch gekennzeichnet, dass** das Lichtleitmittel (19) ringförmig oder ringsegmentförmig ausgebildet ist, wobei eine Ringachse parallel, insbesondere konzentrisch, zur Schwenkachse (4) ausgerichtet ist.

12. Messanordnung nach Anspruch 8 oder 9, **dadurch gekennzeichnet, dass** dem Leuchtmittel (17) Reflektormittel zugeordnet sind, die für eine Ausrichtung der vom Leuchtmittel (17) abgegebenen Lichtwellen in Richtung der Skale (18) ausgebildet sind.

13. Messanordnung nach Ansprüche 8 oder 9, **dadurch gekennzeichnet, dass** wenigstens ein Leuchtmittel (17) als Leuchtdiode, insbesondere als organische Leuchtdiode, mit einer im Wesentlichen der Skale (18) entsprechenden Ausdehnung ausgebildet ist.

14. Messanordnung nach einem der Ansprüche 8 bis 13, **dadurch gekennzeichnet, dass** die Skale (18) aus einem für Lichtwellen zumindest im Wesentlichen durchlässigen Material hergestellt ist.

15. Messanordnung nach einem der vorhergehenden Ansprüche, **dadurch gekennzeichnet, dass** die Abtasteinrichtung (7) für eine Nachrüstung eines sensorfreien Messgrößen-Bewegungswandlers ausgebildet ist.
